# FASCICULE DE BREVET EUROPEEN

(11) **EP 0 763 752 B1**
(45) Date de publication et mention de la délivrance du brevet: **05.12.2001**
(21) Numéro de dépôt: 96401949.1
(22) Date de dépôt: 12.09.1996
(51) Int. Cl.: G01T 3/00

(54) **Système, dispositif et procédé de contrôle d'une paroi d'absorption de neutrons thermiques**
System, Einrichtung und Verfahren zur Bestimmung der Absorption einer Wand für thermische Neutronen
System, method and apparatus for determining the thermal neutron absorption of a wall

(30) Priorité: 15.09.1995 FR 9510848
(43) Date de publication de la demande: 19.03.1997
(73) Titulaire: A.T.E.A. Société Atlantique de Techniques Avancées, 44472 Carquefou (FR)
(72) Inventeur: Bach, Pierre, 94700 Maisons Alfort (FR); Gosset, Philippe, 78350 Jouy en Josas (FR)
(74) Mandataire: Dubois-Chabert, Guy

(56) Documents cités:
- EP-A- 0 307 302
- US-A- 3 050 624
- US-A- 4 243 886
- US-A- 4 565 926

## Description

### Domaine technique

La présente invention se rapporte à un système de contrôle d'une paroi d'absorption de neutrons thermiques. Elle concerne aussi des procédés de contrôle d'une telle paroi avec le système de l'invention.

Le contrôle d'une paroi d'absorption de neutrons comporte en particulier le contrôle de la qualité d'absorption de la paroi, la détection d'éventuels défauts dans la paroi, la localisation de ces défauts et la détermination de leur taille et de leur importance.

L'invention trouve des applications en particulier dans le contrôle des parois d'alvéoles de stockage ou de transport de combustibles nucléaires usés.

Le contrôle des parois de ces alvéoles a lieu en particulier avant la mise en service des alvéoles puis lors de contrôles périodiques pendant leur durée d'utilisation.

### Etat de la technique antérieure

Dans l'industrie nucléaire, des assemblages de combustibles irradiés sont stockés dans des râteliers qui comportent des alvéoles généralement de forme polygonale ou carrée. De tels râteliers sont décrits, par exemple dans le document (1) référencé à la fin de la présente description.

Les râteliers peuvent être immergés, par exemple, dans une piscine d'eau additionnée d'un absorbeur de neutrons.

Les alvéoles présentent des parois métalliques et comportent un matériau capable d'absorber des neutrons thermiques, c'est-à-dire des neutrons dont l'énergie est de l'ordre de l'électronvolt. Dans la suite de la description, ce type de matériau est désigné par matériau "neutrophage". Les parois des alvéoles peuvent être directement en un matériau neutrophage tel que, par exemple, un alliage de cadmium ou un acier contenant du bore. Elle peuvent également être formées respectivement de deux feuilles de support en acier inoxydable entre lesquelles est disposé le matériau neutrophage.

On peut se reporter à ce sujet aux documents (1) et (2) référencés à la fin de la présente description.

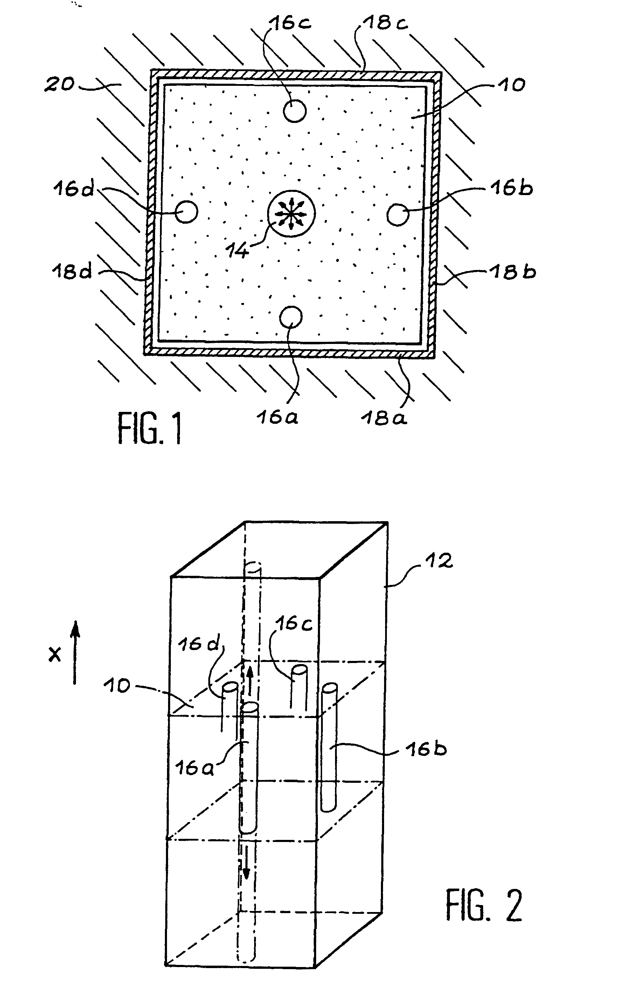

La figure 1 annexée, montre en coupe transversale un système connu de contrôle d'une paroi d'une alvéole de stockage. Le système comporte un bloc d'acier 10 dont les dimensions sont ajustées sur celles d'une alvéole 12 afin de permettre un coulissement du bloc 10 dans l'alvéole, le long des parois dans une direction perpendiculaire au plan de la figure.

Le bloc d'acier comporte une source isotopique de californium 252 de neutrons rapides 14 en une position centrale et quatre détecteurs de neutrons thermiques 16a, 16b, 16c, 16d en forme de cylindre disposés sur les bords du bloc d'acier, en regard des parois 18a, 18b, 18c, 18d de l'alvéole 12.

On entend par neutrons rapides des neutrons dont l'énergie est de l'ordre de grandeur du Méga-électronvolt. Les détecteurs 16a, 16b, 16c et 16d sont pratiquement insensibles à ces neutrons rapides et les parois 18a, 18b, 18c, 18d équipées de matériau neutrophage n'absorbent pratiquement pas les neutrons rapides dont l'énergie est trop élevée.

Les neutrons rapides émis par la source isotopique 14 traversent le bloc d'acier 10 qui a un rôle de ralentisseur neutronique pour améliorer le rendement de thermalisation au voisinage de l'alvéole, éventuellement les détecteurs 16a, 16b, 16c, 16d, et les parois 18a, 18b, 18c, 18d, pour atteindre un milieu thermaliseur 20 entourant l'alvéole 12. Il s'agit par exemple d'eau additionnée de bore ou de tout autre matériau à base d'hydrogène ou de carbone.

Dans le milieu thermaliseur, les neutrons rapides perdent leur énergie pour se convertir en neutrons thermiques capables d'être arrêtés par le matériau neutrophage, mais aussi capables d'être détectés par les détecteurs de neutrons. Les neutrons thermiques ont une énergie de l'ordre de l'électronvolt seulement.

Les neutrons thermiques diffusent dans toutes les directions et donc aussi en direction de l'intérieur de l'alvéole 12. Dans l'hypothèse d'une lacune dans le matériau neutrophage des parois 18a, 18b, 18c, 18d ou dans le cas d'une absence d'un tel matériau, les neutrons thermiques ne sont pas absorbés et pénètrent donc dans l'alvéole où ils sont détectés par les détecteurs 16a, 16b, 16c, 16d. On peut se reporter à ce sujet au document (3) dont la référence est donnée à la fin de la présente description.

L'enregistrement des neutrons par l'un des détecteurs permet la localisation approximative de la lacune ou du défaut de la paroi.

On peut noter que l'utilisation d'une source isotopique pose des problèmes de radioprotection, notamment lors de son transport et lors du transfert du bloc 10 dans les alvéoles.

Le bloc 10 est déplacé en coulissement dans l'alvéole le long des parois 18a, 18b, 18c, 18d de façon à les explorer.

La figure 2 montre de façon schématique et simplifiée le coulissement du bloc 10 dans l'alvéole 12 et montre la position des détecteurs 16a, 16b, 16c, 16d. Ces détecteurs de forme générale en cylindre s'étendent selon une direction X, désignée par une flèche, parallèlement aux parois de l'alvéole 12.

Lors du déplacement du bloc 10 dans l'alvéole les détecteurs décrivent une trajectoire telle que représentée en trait discontinu pour le détecteur 16a de la figure 2.

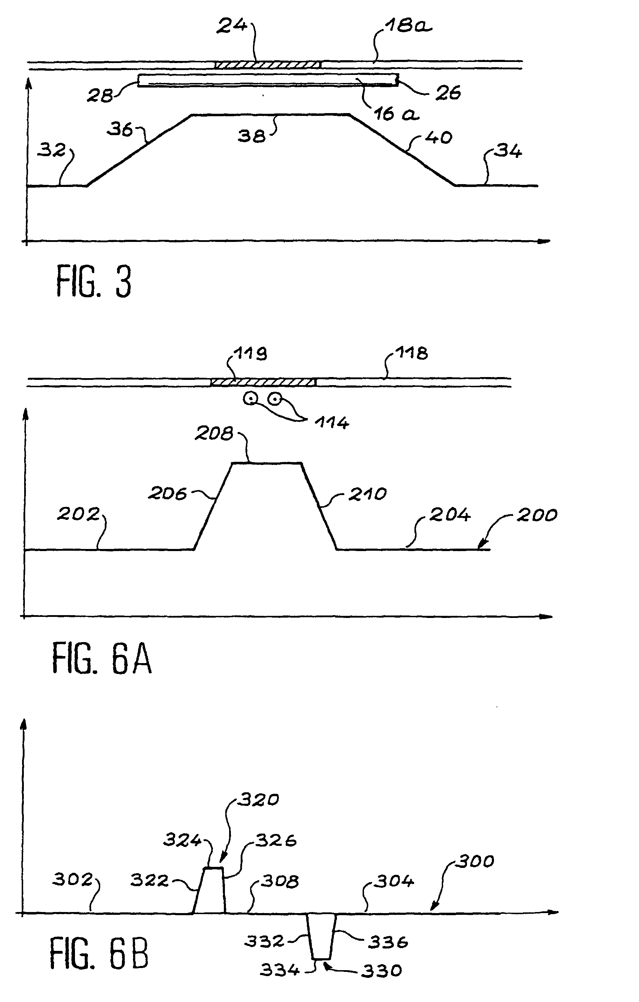

La figure 3 montre, en échelle arbitraire, le signal enregistré par l'un des détecteurs, par exemple le détecteur 16a, lors de son passage devant un défaut 24 de la paroi 18a de l'alvéole dans lequel le matériau absorbant est partiellement ou totalement absent. La courbe de la figure 3 correspond à un déplacement du détecteur du bas vers le haut de l'alvéole, c'est-à-dire dans le sens de la flèche X de la figure 2.

La courbe du signal comporte des régions 32 et 34 dans lesquelles le détecteur n'a pas encore atteint la région du défaut 24 ou a quitté cette région.

Les parties 36 et 40 de la courbe correspondent à une plage de déplacement du détecteur dans lesquelles des portions croissantes (36) ou décroissantes (40) du détecteur sont en regard du défaut.

Dans la partie 36 l'amplitude du signal commence à croître quand l'extrémité 26 du détecteur 16a atteint le défaut 24. Dans la partie 40 l'amplitude du signal commence à décroître lorsque l'extrémité opposée 28 du détecteur 16a commence à quitter la région du défaut.

La partie 38 de la courbe correspond au signal d'amplitude maximum lorsque le détecteur 16a est en face du défaut 24.

Les pentes des parties 36 et 40 de la courbe sont faibles et il n'est pas possible de déterminer avec précision la position et l'importance du défaut dans la paroi.

Un but de la présente invention est de proposer un système perfectionné de contrôle d'une paroi d'absorption de neutrons capable de déterminer avec une grande précision en particulier l'emplacement et/ou l'importance d'un défaut dans une telle paroi.

Un autre but est de proposer un système de contrôle de l'épaisseur du matériau neutrophage d'une paroi.

Un autre but encore est de proposer un système de contrôle permettant de s'affranchir dans une large mesure des problèmes de radioprotection.

L'invention a également pour but de proposer des procédés de contrôle d'une paroi en utilisant le système de contrôle.

### Exposé de l'invention

Pour atteindre les buts mentionnés ci-dessus l'invention a pour objet un système de contrôle d'une paroi d'absorption comportant un matériau absorbeur de neutrons thermiques, le système comprenant :
- un dispositif de détection comprenant une source de neutrons apte à émettre des neutrons rapides et des moyens de détection de neutrons thermiques, aptes à délivrer des signaux de détection, le dispositif étant disposé en regard d'un premier côté de la paroi et pouvant être déplacé le long de la paroi selon une direction de déplacement,
- un milieu thermaliseur disposé sur un côté de la paroi opposé au premier côté, pour convertir les neutrons rapides en neutrons thermiques,
- des moyens de traitement des signaux de détection,
caractérisé en ce que les moyens de détection comportent au moins une paire de détecteurs de neutrons thermiques oblongs, sensiblement parallèles, disposés côte à côte, sensiblement perpendiculairement à la direction de déplacement, chaque détecteur étant apte à délivrer des signaux de détection aux moyens de traitement des signaux pour établir un signal de contrôle de la paroi.

L'utilisation d'une paire de détecteurs disposés de la façon définie ci-dessus permet d'élaborer, à partir des signaux de détection, un signal de contrôle, duquel il est possible de déduire avec précision l'existence, l'importance et l'emplacement d'un défaut dans la paroi.

Avec le système de l'invention, il est également possible de déterminer la qualité et/ou l'épaisseur du matériau neutrophage de la paroi.

On considère que les détecteurs sont disposés côté à côte lorsque la distance qui les sépare est de l'ordre de grandeur de leur section. A titre d'exemple des détecteurs cylindriques avec un diamètre externe de l'ordre du centimètre peuvent être distants de quelques centimètres.

L'ajustage de la distance entre les détecteurs permet notamment de régler la résolution du dispositif de détection pour déterminer la position d'un éventuel défaut dans la paroi.

Selon un aspect de l'invention, les moyens de traitement peuvent comporter un additionneur des signaux de détection délivrés respectivement par chacun des détecteurs de la paire de détecteurs, pour former un signal de contrôle fonction de la somme des signaux de détection.

En réalisant la somme des signaux de détection des deux détecteurs de chaque paire de détecteurs, on obtient un signal de contrôle de la paroi particulièrement adapté au contrôle de l'épaisseur et de la qualité d'absorption du matériau neutrophage dans la paroi.

Selon un autre aspect de l'invention, les moyens de traitement des signaux comportent un soustracteur des signaux de détection délivrés respectivement par chacun des détecteurs de la paire de détecteurs, pour former un signal de contrôle fonction de la différence des signaux de détection.

La présence d'un soustracteur n'est pas exclusive de celle d'un additionneur.

En enregistrant un signal de contrôle égal à la différence des signaux de détection on constate que celui-ci présente pour chaque défaut de la paroi éventuellement détecté, deux ressauts de signe opposé. Ces ressauts, très localisés permettent de déterminer avec grande précision l'emplacement et la taille de chaque défaut détecté.

Pour augmenter encore la résolution et l'efficacité du système de contrôle, le dispositif de détection peut être équipé d'un diffuseur de neutrons rapides disposé entre la source de neutrons rapides et les détecteurs de neutrons thermiques. Le diffuseur de neutrons permet d'augmenter le nombre de neutrons rapides dans un angle dit "angle utile". L'angle utile a pour sommet le centre de la source de neutrons rapides et intercepte les deux détecteurs de neutrons rapides de chaque paire de détecteurs.

Selon une réalisation particulièrement avantageuse du système de l'invention, la source de neutrons peut être un générateur de neutrons rapides. On entend par générateur de neutrons rapides un dispositif capable d'émettre des neutrons, en réponse à des impulsions électriques qui lui sont appliquées. Un tel générateur se distingue donc d'une source de neutrons dite isotopique qui fournit des neutrons de façon continue. Par rapport à une telle source isotopique, un générateur de neutrons permet de faciliter et de simplifier les mesures de radioprotection, notamment lors de l'installation ou du retrait du dispositif de détection de l'alvéole à contrôler.

L'invention concerne également un dispositif de contrôle destiné au système décrit ci-dessus.

Le dispositif comprend une source de neutrons rapides et des moyens de détection de neutrons thermiques, de préférence adjacents à au moins une face de détection. Le dispositif est en outre apte à être déplacé le long de la paroi selon une direction de déplacement et avec la face de détection en regard de la paroi.

Selon l'invention, les moyens de détection comportent au moins une paire de détecteurs de neutrons thermiques oblongs, sensiblement parallèles, disposés côte à côte, sensiblement perpendiculairement à la direction de déplacement du dispositif le long de la paroi.

Le dispositif peut comporter plusieurs faces de détection, équipées chacune d'une ou de plusieurs paires de détecteurs. En particulier, pour le contrôle des alvéoles de stockage de combustible nucléaire le dispositif peut comporter autant de faces de détection que l'alvéole présente de parois, afin de contrôler simultanément toutes les parois.

Le dispositif peut avantageusement présenter, parallèlement aux détecteurs de neutrons thermiques, une section transversale adaptée à la section transversale interne d'une alvéole de stockage de combustible, de façon à pouvoir être déplacé dans l'alvéole le long des parois de l'alvéole.

En particulier la forme et les dimensions de la section du dispositif sont ajustées de façon à permettre son coulissement dans l'alvéole.

L'invention a également pour objet des procédés de contrôle d'une paroi avec un système tel que décrit ci-dessus.

Selon un premier procédé, on déplace le dispositif de détection le long de la paroi, on enregistre un signal de contrôle proportionnel à la somme des signaux de détection des deux détecteurs, en fonction de la position sur la paroi du dispositif de détection et on compare le signal de contrôle à un signal de référence pour définir l'épaisseur du matériau absorbeur de neutrons.

Selon un autre procédé, on déplace le dispositif de détection le long de la paroi, on enregistre un signal de contrôle proportionnel à la différence des signaux de détection, en fonction de la position sur la paroi du dispositif de détection, on mesure l'emplacement de deux éventuels ressauts du signal de contrôle, caractéristiques des limites de chaque défaut du matériau et/ou on mesure la distance entre lesdits ressauts du signal.

D'autres caractéristiques et avantages de la présente invention ressortiront mieux de la description qui va suivre, en référence aux figures des dessins annexés, donnée à titre purement illustratif et non limitatif.

### Brève description des figures

- La figure 1, déjà décrite, est une coupe schématique d'une alvéole de stockage de combustible nucléaire dans laquelle est disposé un dispositif de contrôle des parois de l'alvéole, conforme à l'état de l'art,
- la figure 2 est une illustration schématique simplifiée du coulissement des détecteurs de la figure 1 dans l'alvéole,
- la figure 3 représente un enregistrement d'un signal d'un détecteur conforme aux figures 1 et 2 lors de son passage devant un défaut de la paroi de l'alvéole,
- la figure 4 représente un exemple de système de contrôle d'une paroi conforme à la présente invention,
- la figure 5 est une vue schématique simplifiée qui montre la disposition des détecteurs de neutrons thermiques du système par rapport aux parois d'une alvéole, et par rapport à la source de neutrons,
- les figures 6A et 6B sont des courbes d'enregistrements théoriques de signaux de contrôle établis conformément à l'invention,
- les figures 7A et 7B sont des courbes d'enregistrements établies avec un système conforme à la figure 5.

### Description détaillée de modes de mise en oeuvre de l'invention

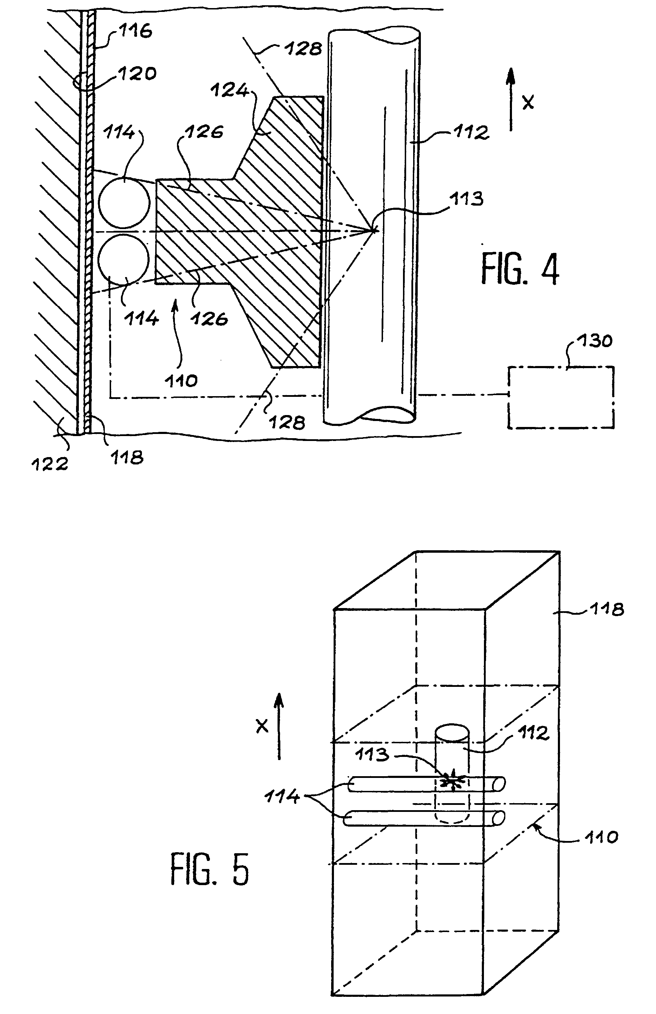

Comme le montre la figure 4, le système de contrôle d'une paroi d'absorption comporte un dispositif de détection 110 avec une source de neutrons rapides 112 et une paire de détecteurs de neutrons thermiques 114.

La source de neutrons 112 est par exemple un générateur de neutrons du type GENIE, commercialisé par la société SODERN. Les détecteurs de neutrons sont des détecteurs de type BF₃ ou He₃.

On note que la source 112 et les détecteurs 114 sont disposés sur un premier côté 116 d'une paroi 118 à contrôler. La paroi 116 comporte un matériau neutrophage tel qu'un alliage de cadmium ou de l'acier additionné de bore.

Sur le côté 120 de la paroi 118, opposé au côté 116, se trouve un milieu thermaliseur 122. Ce milieu peut être par exemple de l'eau additionnée de bore ou un bloc de matériau riche en atomes hydrogène tel que le polyéthylène.

Les neutrons rapides émis par la source traversent les détecteurs 114 et la paroi 118 sans être détectés. Leur énergie est comprise entre environ 1 et 14 MeV. Lorsque les neutrons rapides atteignent le milieu thermaliseur 112 ceux-ci sont convertis, par interaction avec les atomes légers de ce milieu, en neutrons avec une énergie de l'ordre de l'électronvolt. Ces neutrons dits neutrons thermiques diffusent alors dans toutes les directions et en particulier en direction des détecteurs 114.

Or, comme la paroi contient un matériau neutrophage, c'est-à-dire qui arrête les neutrons thermiques, seul un très faible nombre de ces neutrons est détecté dans les détecteurs 114. En revanche, lorsque la paroi présente une lacune ou un défaut du matériau neutrophage, le nombre de neutrons qui la traversent et atteignent les détecteurs devient important.

De façon avantageuse, le dispositif de détection 110 comporte un diffuseur en métal 124 disposé entre la source 112 et les détecteurs 114.

Ce diffuseur 124 permet par diffusion multiple des neutrons, d'augmenter le nombre de neutrons rapides dans l'angle solide utile de contrôle 126. Cet angle utile intercepte les détecteurs rapides 114 de la paire de détecteurs et a pour sommet le centre 113 de la source 112. Il est indiqué sur la figure par des lignes discontinues.

La partie du diffuseur disposée en dehors de l'angle utile 126, et disposée dans les limites des lignes discontinues 128, permet d'augmenter également les neutrons dans l'angle utile 126 par un effet de diffusion multiple.

Une autre fonction du diffuseur est de ralentir par diffusion les neutrons rapides émis par la source pour améliorer leur thermalisation dans le milieu 122 à proximité de la paroi 118. A titre d'exemple, l'énergie des neutrons rapides passe de l'ordre de 14 MeV lors de leur émission par la source 112 à une énergie comprise entre quelques kilo-électronvolts et 1 MeV.

L'ensemble de la source, du diffuseur et des détecteurs peut être monté dans un châssis non représenté, pour faciliter le déplacement du dispositif de détection 110 le long de la paroi 118.

Les détecteurs 114 sont préférentiellement agencés de manière à être disposés le plus près possible de la paroi 118 afin d'augmenter la précision des mesures.

Une unité de traitement des signaux 130, représentée de façon simplifiée, est reliée électriquement aux détecteurs 114. Elle reçoit des détecteurs des signaux de détection. Les signaux de détection des deux détecteurs y sont soit ajoutés soit retranchés l'un à l'autre pour former des signaux de contrôle.

La figure 5 montre de façon simplifiée la position relative de la source et des détecteurs par rapport à une paroi d'une alvéole de stockage à contrôler. Le dispositif de détection 110 dont le boîtier est représenté très schématiquement en trait discontinu, présente une section correspondant à la forme intérieure de l'alvéole dont les parois sont à contrôler, c'est-à-dire, dans le cas de la figure, une section carrée. Le dispositif peut donc coulisser le long des parois de l'alvéole selon la direction X repérée par une flèche sur la figure 5.

Les détecteurs 114 de la paire de détecteurs sont par exemple de forme cylindrique avec une longueur de 200 mm, et un diamètre extérieur de 20 mm. Ils sont disposés perpendiculairement à la direction de coulissement du dispositif de détection 110, c'est-à-dire perpendiculairement à la direction X.

Les détecteurs 114 de la paire de détecteurs sont disposés de façon adjacente à une face de détection du boîtier du dispositif et donc à proximité de la paroi 118 à contrôler. Ils sont disposés parallèlement l'un à l'autre et séparés d'une distance faible. Dans le cas du présent exemple, les détecteurs sont distants de 40 mm.

La source 112 a également une forme en cylindre. Son centre 113 est contenu dans un plan médiateur passant entre les détecteurs 114. En faisant coulisser le dispositif de détection le long de la paroi 118 selon la direction X, par exemple du bas vers le haut, il est possible de balayer cette paroi afin de la contrôler. Toutefois, le dispositif peut être équipé d'une pluralité de paires de détecteurs tournés respectivement vers d'autres parois de l'alvéole pour le contrôle simultané de plusieurs parois.

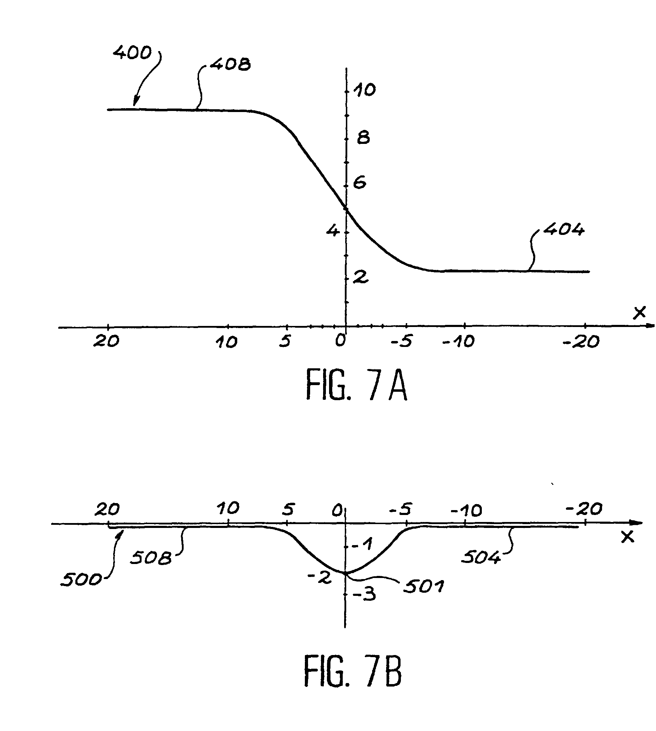

Les figures 6A et 6B montrent des courbes d'enregistrement, en échelle arbitraire, d'un signal de contrôle lors du passage de la paire de détecteurs devant un défaut dans la paroi. Dans la partie supérieure de la figure 6A sont très sommairement représentées une paroi 118 avec un défaut 119 et une paire de détecteurs 114 passant devant le défaut.

Le signal de la courbe 200 à la figure 6A, correspond à la somme des signaux de détection des deux détecteurs de la paire de détecteur.

La courbe, lue de gauche à droite, correspond à un déplacement du dispositif de détection de l'invention devant une paroi, du bas vers le haut dans une alvéole de stockage de combustible nucléaire.

La courbe 200 comporte des portions 202 et 204 qui correspondent à des parties de la paroi qui ne présentent pas de défaut et où le matériau neutrophage est d'une qualité intégrale. Le signal de ces portions de courbe correspond à un bruit de fond et au comptage de neutrons thermiques qui arrivent de façon indirecte sur les détecteurs.

Au début de la zone de défaut de la paroi, le premier détecteur compte un nombre croissant de neutrons thermiques avant le deuxième détecteur. La portion 206 de la courbe correspond à cette augmentation des neutrons détectés. La portion 208 où la courbe est à son amplitude la plus forte, correspond à un comptage d'un maximum de neutrons par les deux détecteurs de la paire qui se trouvent en face du défaut. Enfin, dans la portion 210 de la courbe l'amplitude décroît quand les détecteurs quittent la zone de défaut.

L'amplitude du signal de contrôle, c'est-à-dire les sommes des signaux des deux détecteurs est inversement proportionnelle à l'épaisseur du matériau neutrophage dans la paroi ou l'efficacité locale de l'absorbant.

Ainsi, si on étalonne le système de mesure, par exemple en effectuant successivement des mesures dans une région où la paroi est dépourvue de matériau neutrophage et dans une région où la paroi comporte un tel matériau avec une épaisseur connue, il est possible de mesurer en tout point d'une paroi l'épaisseur du matériau neutrophage.

De façon analogue, il est possible aussi de déterminer la qualité du matériau neutrophage.

La figure 6B montre une courbe d'enregistrement d'un signal de contrôle égal à la différence des signaux des deux détecteurs lorsque ceux-ci passent devant le défaut de la paroi.

Lorsque les deux détecteurs sont face à des parties de la paroi sans défaut, ceux-ci reçoivent une faible quantité de neutrons thermiques et le bruit de fond détecté dans les deux détecteurs s'annule par soustraction aux fluctuations statistiques près. Ceci correspond aux portions 302 et 304 de la courbe 300. Lorsque les deux détecteurs sont face au défaut de la paroi, ceux-ci détectent chacun un nombre maximum de neutrons. Cependant, par la soustraction des signaux de détection, le signal de contrôle présente également une amplitude sensiblement nulle. Ceci correspond à la portion 308 de la courbe 6B.

La courbe 300 comporte aussi deux ressauts 320, 330 de signe opposé qui correspondent aux positions de début et de fin du défaut de la paroi. Chaque ressaut comporte respectivement un front de montée rapide 322, 332, une portion constante 324, 334 et un front de descente rapide 326, 336.

La longueur des portions constantes 324, 334 dépend de la distance entre les détecteurs.

Le positionnement du défaut peut être mesuré avec précision en repérant les ressauts 320 et 330 sur la courbe. Par ailleurs, la taille du défaut mesuré, entre les débuts des fronts de descente 326, 336 est déterminée avec une grande précision.

Les figures 7A et 7B sont des courbes correspondant à un signal de contrôle respectivement additif et soustractif enregistré avec un système conforme à l'invention. Les deux détecteurs utilisés sont des détecteurs avec un diamètre extérieur de 20 mm. Ils sont séparés mutuellement d'une distance de 40 mm. Les courbes 400, 500 des figures 7A et 7B montrent en détail la transition entre une région de la paroi sans défaut et une région où le matériau neutrophage est absent.

L'axe des ordonnées des graphiques des figures 7A et 7B indique la position du début d'un défaut dans la paroi. Les distances de part et d'autre de ce défaut sont indiquées en centimètres. L'amplitude du signal (exprimée en unité arbitraire) correspond à une somme (figure 7A) ou une différence (figure 7B) du nombre de neutrons détectés dans les détecteurs respectifs de la paire de détecteurs.

Les références 404 et 504 désignent respectivement des portions des courbes de signal 400 et 500 où les détecteurs sont en face d'une région de la paroi dans laquelle le matériau neutrophage est intégralement présent. Les références 408 et 508 désignent des portions des courbes 400 et 500 où les détecteurs sont en face d'un défaut.

On constate sur la courbe 400 de la figure 7A, qui correspond à une partie de la courbe 200 de la figure 6A, que la transition entre les portions 404 et 408 s'étend de part et d'autre de la limite du défaut sur une distance de 5 cm.

Sur la courbe 500 de la figure 7B, qui correspond à une partie de la courbe 300 de la figure 6B, on observe un ressaut centré sur la limite de la zone de défaut de la paroi. La limite du défaut correspond précisément au point d'inflexion 501 de la courbe 500, qui est facile à déterminer.

Finalement grâce à l'invention, il est possible de connaître avec précision l'importance, la taille et les limites d'un défaut dans le matériau neutrophage.

### DOCUMENTS CITES DANS LA PRESENTE DEMANDE

***(1)*** FR-A-2 680 909
***(2)*** FR-A-2 551 907
***(3)*** US-A-4 243 886

## Revendications

1. Dispositif de détection (110) pour le contrôle d'une paroi d'absorption de neutrons (118) d'une alvéole de stockage de combustible s'étendant selon une direction (X), le dispositif présentant une section transversale adaptée à l'alvéole de façon à pouvoir coulisser dans l'alvéole selon la direction (X) et comprenant une source de neutrons rapides (112) et des moyens de détection de neutrons thermiques, **caractérisé en ce que** les moyens de détection comportent au moins une paire de détecteurs (114) de neutrons thermiques, oblongs, sensiblement parallèles, disposés côte à côte, sensiblement perpendiculairement à ladite direction (X).

2. Système de contrôle d'une paroi d'absorption (118) comportant un matériau absorbeur de neutrons thermiques, le système comprenant :
- un dispositif de détection (110) conforme à la revendication 1
- un milieu thermaliseur (122) apte à être disposé sur un côté (120) de la paroi (118) à l'opposé du dispositif de détection, pour convertir les neutrons rapides de la source en neutrons thermiques,
- des moyens de traitement (130) des signaux de détection,
dans lequel chaque détecteur (114) est apte à délivrer des signaux de détection aux moyens de traitement des signaux (180) pour établir un signal de contrôle de la paroi.

3. Système selon la revendication 2,
**caractérisé en ce que** les moyens de traitement des signaux (130) comportent un additionneur des signaux de détection délivrés respectivement par chacun des détecteurs (114) de la paire de détecteurs, pour former un signal de contrôle fonction de la somme des signaux de détection.

4. Système selon la revendication 2,
**caractérisé en ce que** les moyens de traitement des signaux (130) comportent un soustracteur des signaux de détection délivrés respectivement par chacun des détecteurs (114) de la paire de détecteurs, pour former un signal de contrôle fonction de la différence des signaux de détection.

5. Système selon la revendication 2,
**caractérisé en ce que** le dispositif de détection (110) comporte un diffuseur de neutrons (124) disposé entre la source de neutrons rapides (112) et les détecteurs de neutrons thermiques (114) pour augmenter le nombre de neutrons rapides dans un angle (126) dit angle utile, ledit angle utile (126) ayant pour sommet le centre (113) de la source de neutrons rapides et interceptant les deux détecteurs de neutrons rapides de chaque paire de détecteurs.

6. système selon la revendication 2,
**caractérisé en ce que** les détecteurs de neutrons thermiques (114) présentent la forme de cylindres d'une longueur de l'ordre de 200 mm, et d'un diamètre externe de l'ordre de 20 mm, et sont espacés d'une distance de l'ordre de 40 mm.

7. Système selon la revendication 2,
**caractérisé en ce que** la source de neutrons (112) est un générateur de neutrons apte à émettre des neutrons rapides en réponse à des impulsions électriques qui lui sont appliquées.

8. Procédé de contrôle d'une paroi d'absorption de neutrons (118) pour déterminer une épaisseur du matériau absorbeur de neutrons thermiques ou une efficacité d'absorption de matériau avec un système de contrôle conforme à la revendication 1, selon lequel on déplace le dispositif de détection (110) le long de la paroi (118), on enregistre un signal de contrôle (200) proportionnel à la somme des signaux de détection des deux détecteurs, en fonction de la position sur la paroi du dispositif de détection et on compare le signal de contrôle à un signal de référence pour définir l'épaisseur du matériau absorbeur de neutrons le long de la paroi ou une efficacité d'absorption de matériau.

9. Procédé de contrôle d'une paroi d'absorption de neutrons pour déterminer l'emplacement et/ou la longueur d'un éventuel défaut (119) du matériau absorbeur de neutrons dans la paroi (118), avec un système de contrôle conforme à la revendication 2, selon lequel :
- on déplace le dispositif de détection le long de la paroi,
- on enregistre un signal de contrôle (300) proportionnel à la différence des signaux de détection, en fonction de la position sur la paroi du dispositif de détection,
- on mesure l'emplacement de deux éventuels ressauts (320, 330) du signal de contrôle, caractéristiques des limites de chaque défaut du matériau et/ou on mesure la distance entre lesdits ressauts du signal.

## Patentansprüche

1. Detektionsvorrichtung (110) für die Überwachung bzw. Kontrolle einer Neutronenabsorptionswand (118) einer Brennstoffspeicherzelle, die sich in einer Richtung (X) erstreckt, wobei die Vorrichtung einen Querschnitt aufweist, der der Zelle so angepaßt ist, daß sie in der Zelle in der Richtung (X) verschoben werden kann, und eine Quelle schneller Neutronen (112) sowie Detektionsmittel thermischer Neutronen umfaßt,
**dadurch gekennzeichnet, daß** die Detektionsmittel mindestens ein Paar länglicher, im wesentlichen paralleler, Seite an Seite im wesentlichen senkrecht zu der Richtung (X) angeordneter Detektoren (114) thermischer Neutronen umfassen.

2. Überwachungssystem einer Absorptionswand (118) mit einem Absorptionsmaterial für thermische Neutronen, wobei das System umfaßt:
- eine Detektionsvorrichtung (110) gemäß Anspruch 1,
- ein thermalisierendes Medium (122), das auf einer Seite (120) der Wand (118) gegenüber der Detektionsvorrichtung angeordnet werden kann, um die schnellen Neutronen der Quelle in thermische Neutronen umzuwandeln,
- Behandlungs- bzw. Bearbeitungsmittel (130) der Detektionssignale,
wobei jeder Detektor (114) den Signal-Behandlungsmitteln (130) Detektionssignale zu liefern vermag, um ein Signal zur Überwachung der Wand zu erstellen.

3. System gemäß Anspruch 2, **dadurch gekennzeichnet, daß** die Signal-Behandlungsmittel (130) eine Summierschaltung für die jeweils von jedem der Detektoren (114) des Detektorenpaars gelieferten Detektionssignale umfassen, um ein Überwachungssignal als Funktion der Summe der Detektionssignale zu bilden.

4. System gemäß Anspruch 2, **dadurch gekennzeichnet, daß** die Signal-Behandlungsmittel (130) eine Subtraktionsschaltung der jeweils von jedem der Detektoren (114) des Detektorenpaars gelieferten Signale umfassen, um ein Überwachungssignal als Funktion der Differenz der Detektionssignale zu bilden.

5. System gemäß Anspruch 2, **dadurch gekennzeichnet, daß** die Detektionsvorrichtung (110) einen zwischen der Quelle (112) schneller Neutronen und den Detektoren (114) thermischer Neutronen angeordneten Neutronen-Diffusor (124) aufweist um die Anzahl schneller Neutronen in einem Winkel (126), einem sog. Nutzwinkel (angle utile), zu erhöhen, wobei der Nutzwinkel (126) das Zentrum (113) der Quelle schneller Neutronen zum Scheitel hat und die beiden Detektoren schneller Neutronen jedes Detektorenpaars interzeptiert bzw. abfängt.

6. System gemäß Anspruch 2, **dadurch gekennzeichnet, daß** die Detektoren (114) thermischer Neutronen die Form von Zylindern einer Länge von ca. 200 mm und eines Außendurchmessers von ca. 20 mm aufweisen und in einem Abstand von ca. 40 mm beabstandet sind.

7. System gemäß Anspruch 2, **dadurch gekennzeichnet, daß** die Neutronenquelle (112) ein Neutronengenerator ist, der als Reaktion auf an ihn angelegte elektrische Impulse schnelle Neutronen emittieren kann.

8. Verfahren zur Überwachung bzw. Kontrolle einer Neutronenabsorptionswand (118) zur Bestimmung einer Dicke des Absorptionsmaterials für thermische Neutronen oder einer Absorptionswirkung des Materials mit einem Überwachungssystem nach Anspruch 1, gemäß dem die Detektionsvorrichtung (110) längs der Wand (118) verschoben wird, ein zur Summe der Detektionssignale der zwei Detektoren proportionales Überwachungssignal (200) als Funktion der Position der Detektionsvorrichtung an der Wand aufgezeichnet wird und das Überwachungssignal mit einem Referenzsignal verglichen wird, um die Dicke des Absorptionsmaterials für Neutronen entlang der Wand oder die Absorptionswirkung des Materials zu definieren.

9. Verfahren zur Überwachung bzw. Kontrolle einer Neutronenabsorptionswand zur Bestimmung der Lage und/oder der Länge eines eventuellen Defekts (119) des Neutronen-Absorptionsmaterials in der Wand (118), mit einem Überwachungssystem nach Anspruch 2, gemäß dem:
- die Detektionsvorrichtung längs der Wand verschoben wird,
- ein zur Differenz der Detektionssignale proportionales Überwachungssignal (300) als Funktion der Position der Detektionsvorrichtung an der Wand aufgezeichnet wird,
- die Lage zweier eventueller Spitzen bzw. Höcker (320,330) des Überwachungssignals, die kennzeichnend für die Grenzen jedes Materialdefekts sind, oder der Abstand zwischen den Signalhöckern gemessen wird.

## Claims

1. Detection device (110) for the inspection of a neutron absorption wall (118) of a fuel storage compartment extending in a direction (X), the device having a cross-section adapted to the compartment so as to be able to slide into the compartment in the direction (X) and comprising a fast neutron source (112) and thermal neutron detection means, **characterized in that** the detection means comprise at least pair of juxtaposed, substantially parallel, oblong, thermal neutron detector pair (114) substantially perpendicular to said direction (X).

2. System for the inspection of an absorption wall (118) comprising a thermal neutron absorption material, the system comprising :
- a detection device (110) according to claim 1,
- a thermalizing environment (122) placed on one side (120) of the wall (118), opposite the first side (116), to convert fast neutrons from the source into thermal neutrons,
- means of processing detection signals (130),
in which each detector (114) is able to supply detection signals to signal processing means (180) to set up a wall inspection signal.

3. System according to claim 2, **characterized in that** the signal processing means (130) comprise an adder for detection signals output by each detector (114) in the pair of detectors, to form an inspection signal that is a function of the sum of the detection signals.

4. System according to claim 2, **characterized in that** the signal processing means (130) comprise a subtractor for detection signals output by each of the detectors (114) in the pair of detectors, to form an inspection signal that is a function of the difference between the detection signals.

5. System according to claim 2, **characterized in that** the detection device (110) includes a neutron diffuser (124) located between the fast neutron source (112) and thermal neutron detectors (114) to increase the number of fast neutrons within an angle (126) called the useful angle, said useful angle (126) having the vertex at the centre (113) of the fast neutron source and intercepting the two fast neutron detectors in each pair of detectors.

6. System according to claim 2, **characterized in that** the thermal neutron detectors (114) are in the shape of cylinders with a length of about 200 mm, and an outside diameter of about 20 mm, and at a spacing of about 40 mm.

7. System according to claim 2, **characterized in that** the neutron source (112) is a neutron generator capable of emitting fast neutrons in response to electric impulses applied to it.

8. Process for inspecting a neutron absorption wall (118) to determine a thickness of the thermal neutron absorption material, or a material absorption efficiency with an inspection system according to claim 1, in which the detection device (110) is moved along the wall (118), an inspection signal (200) proportional to the sum of the detection signals from the two detectors is recorded as a function of the position of the detection device along the wall, and the inspection signal is compared with a reference signal to define the thickness of the neutron absorbing material along the wall, or a material absorption efficiency.

9. Process for inspecting a neutron absorption wall, to determine the position and/or length of a defect (119) in the neutron absorption material in the wall (118) using an inspection system according to claim 2, in which:
- the detection device is moved along the wall,
- an inspection signal (300) proportional to the difference between the detection signals is recorded, as a function of the position cf the detection device on the wall,
- the position of two discontinuities (320, 330) in the inspection signal and/or the distance between said discontinuities in the signal are measured; these discontinuities are characteristic of the boundaries of each defect in the material.
